(19) Europäisches Patentamt
European Patent Office
Office européen des brevets

(11) **EP 4 535 373 A1**

(12) **EUROPEAN PATENT APPLICATION**
published in accordance with Art. 153(4) EPC

(43) Date of publication:
**09.04.2025 Bulletin 2025/15**

(21) Application number: **23815684.8**

(22) Date of filing: **08.05.2023**

(51) International Patent Classification (IPC):
***H01B 1/06*** *(2006.01)* ***H01M 10/0568*** *(2010.01)*

(52) Cooperative Patent Classification (CPC):
**H01B 1/06; H01M 10/0568**

(86) International application number:
**PCT/JP2023/017254**

(87) International publication number:
**WO 2023/233923 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.06.2022 JP 2022090789**

(71) Applicant: **Niterra Co., Ltd.**
**Nagoya-shi, Aichi 461-0005 (JP)**

(72) Inventors:
- **WATANABE Yuu**
**Nagoya-shi, Aichi 461-0005 (JP)**
- **TAKEUCHI Yuki**
**Nagoya-shi, Aichi 461-0005 (JP)**
- **IWASAKI Masato**
**Nagoya-shi, Aichi 461-0005 (JP)**

(74) Representative: **Zimmermann & Partner Patentanwälte mbB**
**Postfach 330 920**
**80069 München (DE)**

# (54) COMPOSITE, SHEET, ELECTROCHEMICAL ELEMENT, AND POWER STORAGE DEVICE

(57) To provide a composite, a sheet, an electrochemical element, and a power storage device, ensuring electrical conductivity. A composite (10) includes a metal oxide (19) and an ester-type solvent (23) in which an electrolyte salt is dissolved, in which an ionic liquid (22) attaches to the surface of the metal oxide. A sheet (12) contains the composite. An electrochemical element (11) contains the composite. A power storage device (11) includes a positive electrode layer (12), a negative electrode layer (16), and a separator (15) which isolates the positive electrode layer from the negative electrode layer, and contains the composite.

*FIG. 2*

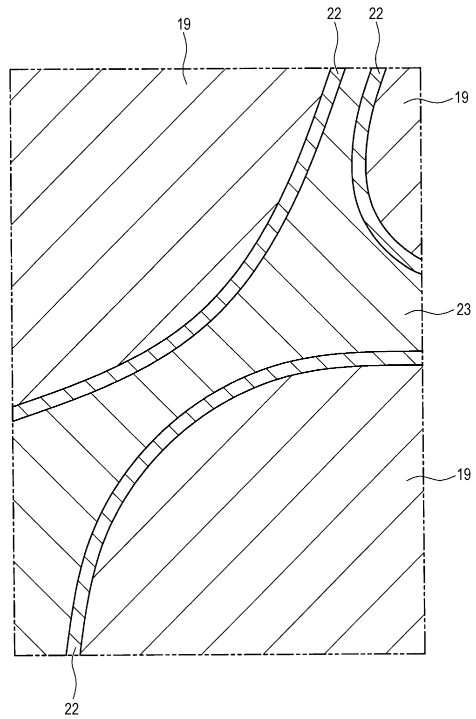


EP 4 535 373 A1

**Description**

TECHNICAL FIELD

The present invention relates to a composite, to a sheet containing the composite, to an electrochemical element, and to a power storage device.

BACKGROUND ART

Patent Literature 1 discloses conventional techniques in relation to an organic solvent (ester-type solvent) formed of a chain carbonate or a cyclic carbonate in which a lithium salt (an electrolyte salt) is dissolved, and a nonaqueous electrolyte (a composite) including an oxide solid electrolyte (a metal oxide) having a garnet-type structure.

CITATION LIST

PATENT LITERATURE

Patent Literature 1: JP2018-45965A

SUMMARY OF INVENTION

TECHNICAL PROBLEM

According to the conventional techniques, an ester-type solvent in contact with metal oxide decomposes in some cases, resulting in a decrease in electrical conductivity of a relevant composite.

The present invention has been made in order to solve the above problem, and an object of the invention is to provide a composite ensuring electrical conductivity, a sheet, an electrochemical element, and a power storage device.

SOLUTION TO PROBLEM

In a first aspect of the present invention to attain the above object, there is provided a composite containing a metal oxide and an ester-type solvent in which an electrolyte salt is dissolved. In the composite, an ionic liquid attaches to the surface of the metal oxide.

In a second aspect, a ratio in heat quantity of Q2/Q1 is less than 0.5. Q1 is a heat quantity (J/g) which is attributed to solidification of an ionic liquid having the same molecular structure as that of the ionic liquid contained in the composite of the first aspect and which is determined through differential scanning calorimetry, and Q2 is a heat quantity (J/g) which is attributed to solidification of an ionic liquid contained in a mixture which is provided by mixing the ionic liquid and a metal oxide having the same molecular structures as those of the ionic liquid and the metal oxide contained in the composite of the first aspect at the same compositional ratio as that employed in the composite of the first aspect, and which is determined through differential scanning calorimetry.

In a third aspect, a value of $V/S \times 10^9$ is 1 nm or more and 40 nm or less. S is a surface area ($m^2$) of the metal oxide, and V is a volume ($m^3$) of the ionic liquid, in the first and second aspects.

In a fourth aspect, the ionic liquid of the third aspect contains a fluorine atom in the molecular structure, and a ratio W1/W2 is 1.1 or more. W1 is a half width of at least one signal of the signals measured through $^{19}F$ nuclear magnetic resonance spectroscopy and attributed to a fluorine atom contained in the ion liquid contained a first mixture which is provided by mixing an ionic liquid having the same molecular structure as that of the aforementioned ionic liquid and a metal oxide contained in the composite at the same compositional ratio as that employed in the composite, and W2 is a half width of a signal measured through $^{19}F$ nuclear magnetic resonance spectroscopy and attributed to a fluorine atom contained in a second mixture which is prepared by use of an ionic liquid having the same molecular structure as that of the aforementioned ionic liquid and a metal oxide contained in the composite so as to adjust the value of $V/S \times 10^9$ to 35 nm.

In a fifth aspect, there is provided a sheet containing a composite as recited in any of the first to fourth aspects.

In a sixth aspect, there is provided an electrochemical element containing a composite as recited in any of the first to fourth aspects.

In a seventh aspect, there is provided a power storage device having a positive electrode layer, a negative electrode layer, and a separator which isolates the positive electrode layer from the negative electrode layer. The device contains a composite as recited in any of the first to fourth aspects.

In an eighth aspect, at least one of the positive electrode layer, the negative electrode layer, and the separator of the seventh aspect contains a composite.

In a ninth aspect, in the seventh aspect, at least one of the positive electrode layer and the negative electrode layer includes a current-collecting layer, and a protective layer abutting at least one of the separator and the current-collecting layer is disposed. The protective layer contains a composite.

ADVANTAGEOUS EFFECTS OF INVENTION

In the composite of the present invention, an ionic liquid is present between the metal oxide and the ester-type solvent in which an electrolyte salt is dissolved. Thus, the amount of the ester-type solvent which comes into direct contact with the metal oxide can be reduced. Since decomposition of the ester-type solvent is suppressed, electrical conductivity of a composite, a sheet containing the composite, an electrochemical element, and a power storage device can be secured.

BRIEF DESCRIPTION OF DRAWINGS

FIG. 1 is a cross-section of an electrochemical element containing a composite of the first embodiment.
FIG. 2 is a cross-section of a composite.
FIG. 3 is a schematic view of a garnet-type crystal structure.
FIG. 4 is a cross-section of an electrochemical element containing a composite of the second embodiment.
FIG. 5 is a cross-section of an electrochemical element containing a composite of the third embodiment.

DESCRIPTION OF EMBODIMENTS

Hereinafter, a preferred embodiment of the present invention will be described with reference to attached drawings. FIG. 1 is a schematic cross-section of an electrochemical element 11 containing a composite 10 of the first embodiment. The electrochemical element 11 of the present embodiment corresponds to a lithium ion solid battery (i.e., power storage device) in which power generating elements are formed of a solid material. The expression "a power generating element is formed of a solid material" refers to a case in which a main body of the power generating element is formed of a solid material, and also encompasses an embodiment in which the main body has been impregnated with liquid.

The electrochemical element 11 includes, from top to bottom, a positive electrode layer 12, an electrolyte layer 15, and a negative electrode layer 16. The positive electrode layer 12, the electrolyte layer 15, and the negative electrode layer 16 are all in the sheet form. The positive electrode layer 12, the electrolyte layer 15, and the negative electrode layer 16 are built in a case (not illustrated). The electrolyte layer 15 is formed of the composite 10, and the composite 10 contains a metal oxide 19. The electrolyte layer 15 of the present embodiment corresponds to a separator. The separator isolates the positive electrode layer 12 from the negative electrode layer 16 provides electrical insulation therebetween.

The positive electrode layer 12 includes a current-collecting layer 13 and a composite layer 14 stacked thereon. The current-collecting layer 13 is a member having an electrical conductivity. Examples of the material of the current-collecting layer 13 include metals selected from among Ni, Ti, Fe, and Al; alloys each containing two or more of such metals; stainless steel; and carbon material.

The composite layer 14 contains the composite 10 and an active material 20. For lowering the resistance of the composite layer 14, the composite layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide in which the metal includes Li and at least one element selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_2$, $LiNi_{1/3}Mn_{1/3}Co_{1/3}O_2$, and $LiFePO_4$.

In order to suppress reaction between the active material 20 and the metal oxide 19, a coating layer may be provided on the active material 20. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radiarene compounds; tetracyanoxydimethane; and phenadine oxide.

The negative electrode layer 16 includes a current-collecting layer 17 and a composite layer 18 stacked thereon. The current-collecting layer 17 is a member having an electrical conductivity. Examples of the material of the current-collecting layer 17 include metals selected from among Ni, Ti, Fe, Cu, and Si; alloys each containing two or more of such

metals; stainless steel; and carbon material.

The composite layer 18 contains the composite 10 and an active material 21. For lowering the resistance of the composite layer 18, the composite layer 18 may contain a conducting aid. Examples of the conducting aid include carbon black, acetylene black, Ketjen black, carbon fiber, Ni, Pt, and Ag. Examples of the active material 21 include Li, Li-Al alloy, $Li_4Ti_5O_{12}$, graphite, In, Si, Si-Li alloy, and SiO.

FIG. 2 is a cross-section of the composite 10. FIG. 2 is an enlarged schematic view of a part of the cross-section of the composite 10. The composite 10 contains a metal oxide 19, an ionic liquid 22, and an ester-type solvent 23 in which an electrolyte salt is dissolved. The ionic liquid 22 attaches to the surface of the metal oxide 19. Between the metal oxide 19 and the ester-type solvent 23, the ionic liquid 22 is present.

The metal oxide 19 is a material for forming the composite 10 and is a metal oxide. The metal oxide 19 is a basic oxide. Examples of the metal element forming the metal oxide 19 include group 1 elements such as Li, Na, and K; group 2 elements such as Mg, Ca, and Sr; transition metals such as Sc, Y, Ti, Zr, V, Nb, Cr, Mo, Mn, Fe, Co, Ni, and Cu; lanthanoids; actinoids; and semi-metals such as Ga, Ge, In, Sb, and Bi. However, Al, Zn, Sn, and Pb (amphoteric elements) are excluded from the metal element. So long as one or more metal elements are included, the metal oxide 19 may contain an amphoteric element.

Examples of the metal oxide 19 include $Li_2O$, MgO, $Y_2O_3$, $TiO_2$, $ZrO_2$, $Nb_2O_5$, $Cr_2O_3$, and NiO. The metal oxide 19 also encompasses an ion conductor formed of a composite oxide having a garnet or garnet-like crystal structure including Li, La, and Zr. The metal oxide 19 is selected from one or more species of particles having no ion conductivity and ion conductors.

FIG. 3 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. In a typical garnet-type crystal structure, Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, wherein Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The ion conductor formed of a composite oxide having a garnet or garnet-like crystal structure exhibits an XRD pattern similar to that of an X-ray diffraction file No. 422259 ($Li_7La_3Zr_2O_{12}$) of CSD (Cambridge Structural Database). As compared with No. 422259, the ion conductor may have differences in the type of elements forming oxide, the Li concentration, and the like. Therefore, diffraction angle and intensity ratio may vary. A typical crystal structure of the ion conductor is a cubic system (space group: Ia-3d ("-" is an over-line representing rotary inversion), JCPDS:84-1753). The ion conductor may be a compound in which the elements forming $Li_7La_3Zr_2O_{12}$ are partially substituted by another element, or may be a mixture containing a tiny amount of another element added thereto without substitution of the elements forming the ion conductor. Examples of the additional element include at least one element selected from the group consisting of Mg, Al, Si, Ca, Ti, V, Ga, Sr, Y, Nb, Sn, Sb, Ba, Hf, Ta, W, Bi, Rb, and a lanthanoid (except for La).

Examples of such an electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0\cdot2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly preferably, the ion conductor contains at least one of Mg and element A (A represents at least one element selected from the group consisting of Ca, Sr, and Ba), and satisfies all the following conditions (1) to (3) regarding mole proportions of the elements. Alternatively, the ion conductor preferably contains both Mg and element A, and satisfies all the following conditions (4) to (6) regarding mole proportions of the elements. From the viewpoint of elevating the ion conductivity of the metal oxide 19, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

Examples of other ion conductors include crystalline or amorphous metal oxides such as a perovskite-type metal oxide, a NASICON-type metal oxide, and a LISICON-type metal oxide. Examples of the perovskite-type metal oxide include an oxide containing at least Li, Ti, and La (e.g., $La_{2/3-X}Li_{3X}TiO_3$). Examples of the NASICON-type metal oxide include an oxide containing at least Li, M (wherein M is one or more elements selected from Ti, Zr, and Ge), and P (e.g., $Li(Al,Ti)_2(PO_4)_3$ or $Li(Al,Ge)_2(PO_4)_3$). Examples of the LISICON-type metal oxide include $Li_{14}Zn(GeO_4)_4$.

The ionic liquid 22 is a compound formed of a cation and an anion and assumes liquid at ambient temperature and normal pressure. The ionic liquid 22 preferably include one or more cation species selected from the group consisting of ammonium, imidazolium, pyrrolidinium, and piperidinium.

The ammonium cation is, for example, a compound represented by formula (1).

[F1]

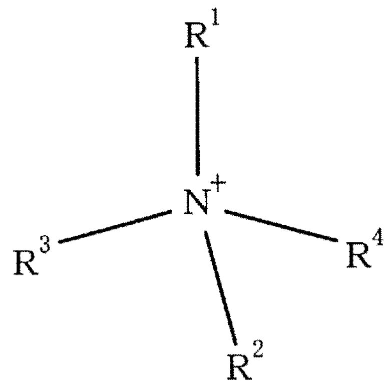

(1)

In formula (1), each of $R^1$ to $R^4$ independently represents an alkyl group. The alkyl group may have a substituent. The alkyl group (including a substituent) represented by any of $R^1$ to $R^4$ preferably has 1 to 5 carbon atoms, more preferably 1 to 4 carbon atoms, from the viewpoint of ensuring ion conductivity in the electrolytic solution.

No particular limitation is imposed on the substituent. Examples of the substituent include an alkyl group, a cycloalkyl group, an aryl group, a hydroxyl group, a carboxyl group, a nitro group, a trifluoromethyl group, an amide group, a carbamoyl group, an ester group, a carbonyloxy group, a cyano group, a halogeno group, an alkoxy group, an aryloxy group, and a sulfonamido group.

The imidazolium cation is, for example, a compound represented by formula (2).

[F2]

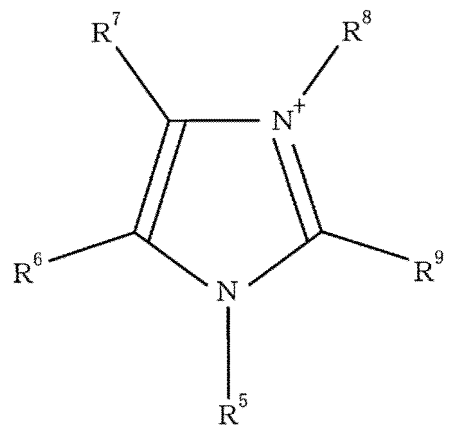

(2)

In formula (2), each of $R^5$ to $R^9$ independently represents a hydrogen group or an alkyl group. The alkyl group may have the same substituent as that of formula (1). The alkyl group (including a substituent) represented by any of $R^5$ to $R^9$ preferably has 1 to 10 carbon atoms, more preferably 1 to 5 carbon atoms, still more preferably 1 to 4 carbon atoms, from the viewpoint of ensuring ion conductivity in the electrolytic solution.

The pyrrolidinium cation is, for example, a 5-membered ring compound represented by formula (3).

[F3]

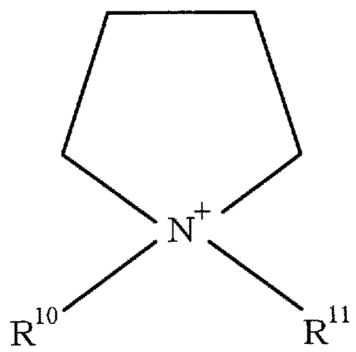

(3)

In formula (3), each of $R^{10}$ and $R^{11}$ independently represents an alkyl group. The alkyl group may have the same substituent as that of formula (1). The alkyl group (including a substituent) represented by any of $R^{10}$ and $R^{11}$ preferably has 1 to 5 carbon atoms, more preferably 1 to 4 carbon atoms, from the viewpoint of ensuring ion conductivity in the electrolytic solution.

The piperidinium cation is, for example, a 6-membered ring compound represented by formula (4).

[F4]

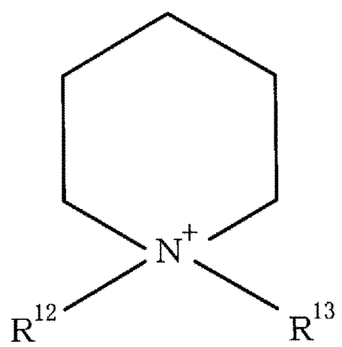

(4)

In formula (4), each of $R^{12}$ and $R^{13}$ independently represents an alkyl group. The alkyl group may have the same substituent as that of formula (1). The alkyl group (including a substituent) represented by any of $R^{12}$ and $R^{13}$ preferably has 1 to 5 carbon atoms, more preferably 1 to 4 carbon atoms, from the viewpoint of ensuring ion conductivity in the electrolytic solution.

No particular limitation is imposed on the anion moiety of the ionic liquid 22. Examples of the anion moiety include inorganic anions such as $BF_4^-$ and $N(SO_2F)_2^-$; and organic anions such as $B(C_6H_5)_4^-$, $CH_3SO_3^-$, $CF_3SO_3^-$, $N(SO_2CF_3)_2^-$, and $N(SO_2C_4F_9)_2^-$. In some cases, $N(SO_2F)_2$- may be abbreviated as referred to as [FSI]) (i.e., bis(fluorosulfonyl)imide anion) and $N(SO_2CF_3)_2$- may be abbreviated as $[TFSI]^-$ (i.e., bis(trifluoromethanesulfonyl)imide anion).

Examples of the ionic liquid 22 include N,N-diethyl-N-methyl-N-(2-methoxyethyl)ammonium bis(fluorosulfonyl) imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI). A mixture thereof may also be employed.

The ionic liquid 22 preferably has a water content of 200 ppm or less, in order to prevent narrowing the potential

window which would otherwise be caused by water present in the ionic liquid 22. The amount of halogen ions (i.e., impurity) present in the ionic liquid 22 is preferably 10 ppm or less. Examples of other impurities present in the ionic liquid 22 include alkali metal ions and alkaline earth metal ions. The total amount of the impurities is preferably 10 ppm or less for preventing a drop in cycle characteristics of the electrochemical element 11 containing the composite 10.

The composite 10 contains an ester-type solvent 23 in which an electrolyte salt is dissolved (i.e., an electrolytic solution). The electrolyte salt is a compound which is employed for establishing transfer of cations between the positive electrode layer 12 and the negative electrode layer 16. Examples of the anion of the electrolyte salt include halide ions (e.g., $I^-$ ,$Cl^-$, and $Br^-$), , $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (wherein R represents a C1 to C4 alkyl group, a phenyl group, or a naphthyl group). A mixture of the electrolyte salts may also be employed.

The ionic liquid 22 may be a solvated ionic liquid. Examples of the solvated ionic liquid include a lithium salt (e.g., lithium bis(fluorosulfonylimide)) dissolved in a sulfone-type solvent (e.g., sulfolane or a sulfolane derivative) or a glyme-type solvent (e.g., tetraglyme).

In the ionic liquid 22, one or more electrolyte salts may be dissolved. When an electrolyte salt is dissolved in the ionic liquid 22, in one case, the salt concentration of the ionic liquid 22 is lower than that of the ester-type solvent 23.

The anion of the electrolyte salt is preferably a sulfonylimido moiety having a sulfonyl group $-S(=O)_2^-$; such as $N(SO_2F)_2^-$, $N(SO_2CF_3)_2^-$, or $N(SO_2C_2F_5)_2^-$. for an advantageous property of the sulfonylimide anion. Specifically, even when the salt concentration increases, a rise in viscosity of the ester-type solvent 23 and a drop in ion conductivity are suppressed. Further, a film which has high stability and low resistivity (SEI) is formed, whereby reductive decomposition of the ester-type solvent 23 is suppressed, and the potential window on the reduction side can be expanded. When the cation is a lithium ion, the electrolyte salt is particularly preferably lithium bis(fluorosulfonyl)imide (LiFSI), since LiFSI provides a less effect of rising the viscosity of the ester-type solvent 23 and is effective for forming suitable passivation film (SEI).

Examples of the ester-type solvent 23 include a carbonate ester, an aliphatic carboxylate ester, a phosphate ester, a sulfate ester, and γ-lactone. A derivative thereof and a mixture thereof may also be employed. By virtue of low viscosity and suitable dielectric constant and potential window, the ester-type solvent 23 preferably serves as an organic solvent for dissolving an electrolyte salt.

Examples of the carbonate ester include cyclic carbonate esters such as propylene carbonate, ethylene carbonate, butylene carbonate, vinylene carbonate, vinylethylene carbonate, and fluoroethylene carbonate; and chain carbonate esters such as dimethyl carbonate, diethyl carbonate, and ethyl methyl carbonate. Examples of the aliphatic carboxylate ester include methyl formate, methyl acetate, ethyl propionate, and dimethyl methylphosphonate. Examples of the phosphate ester include trimethyl phosphate and triethyl phosphate. Examples of the sulfate ester include sultones. Examples of the γ-lactone include γ-butyrolactone.

The electrolyte salt concentration of the ester-type solvent 23 is 0.2 $mol/dm^3$ or more, preferably 0.5 $mol/dm^3$ or more. As the salt concentration increases, the number of solvent molecules coordinating to carrier ions increases. As a result, the non-coordinating solvent decreases, whereby interfacial resistance of the metal oxide 19 successfully decreases.

The salt concentration of the ester-type solvent 23 is preferably 4.0 $mol/dm^3$ or less. When the salt concentration of the ester-type solvent 23 is in excess of 4.0 $mol/dm^3$, ion conductivity considerably decreases by an increase in viscosity of the ester-type solvent 23.

In addition to the ester-type solvent 23, the electrolytic solution contained in the composite 10 may further contain an additional organic solvent. The additional organic solvent reduces the viscosity of, for example, the ester-type solvent 23, leading to an increase in ion conductivity. Examples of the additional organic solvent include acetonitrile, isobutyl methyl ketone, nitromethane, methyl ethyl ketone, and tetramethylsilane. As the additional organic solvent, one or more solvents which do not easily affect the coordination state of carrier ions or solvent molecules are appropriately chosen.

The salt concentration of the ester-type solvent 23 contained in the composite 10 is determined through, for example, the following procedure. Here, the case of the composite 10 forming the electrolyte layer 15 will be described. However, the same procedure can be applicable to the composite 10 forming the composite layer 14 or 18.

Firstly, the electrolyte layer 15 is crushed and immersed in a solvent, to thereby dissolve the electrolytic solution contained in the electrolyte layer 15. The mixture is separated into the solid component and the liquid component by means of a centrifuge. The thus-separated liquid component is analyzed through high-frequency inductively coupled plasma (ICP) analysis, to thereby determine Li content.

Separately, the species of the organic solvent contained in the electrolyte layer 15 is determined through, for example, gas chromatography-mass analysis (GC-MS). The organic solvent identified through thermogravimetry-differential thermal analysis (TG-DTA) (hereinafter referred to as a "standard substance") and the electrolyte layer 15 are analyzed. Through comparison of analytical results of the standard substance with those of the electrolyte layer 15, the amount of the ester-type solvent 23 contained in the electrolyte layer 15 is determined. Based on the Li content of the liquid component and the ester-type solvent 23 content of the electrolyte layer 15, the mole concentration ($mol/dm^3$) of the

electrolyte salt of the ester-type solvent 23 is calculated.

In the composite 10, the ionic liquid 22 is present between the basic metal oxide 19 and the ester-type solvent 23 in which an electrolyte salt is dissolved. The ionic liquid 22 may attach to the entirety of the metal oxide 19 or a part of the metal oxide 19. The ionic liquid 22 may attach to the metal oxide 19 so as to cover the entire surface thereof, or to a part of the surface of the metal oxide 19. When the ionic liquid 22 attaches to the surface of the metal oxide 19, the amount of the ester-type solvent 23 which comes into direct contact with the metal oxide 19 can be reduced. Since decomposition of the ester-type solvent 23 can be suppressed, electrical conductivity of the composite 10 can be secured. Also, since decomposition of the ester-type solvent 23 can be suppressed, a variety of ester-type solvents 23 can be appropriately chosen.

When the surface area of the metal oxide 19 contained in the composite 10 is represented by S ($m^2$), and the volume of the ionic liquid 22 contained in the composite 10 is represented by V ($m^3$), the value of $V/S\times10^9$ (hereinafter referred to as "T") may be adjusted to 1 nm or more and 40 nm. T means the mean thickness (nm) of the ionic liquid 22 attaching to the surface of the metal oxide 19 contained in the composite 10. When T is 1 nm or more and 40 nm, the amount of the ionic liquid 22 used can be reduced, and the amount of the ester-type solvent 23 which interacts with the metal oxide 19 can be further reduced. Thus, decomposition of the ester-type solvent 23 is further suppressed, whereby electrical conductivity of the composite 10 can be secured.

The surface area of the metal oxide 19 of the composite 10 may be determined through a gas adsorption method (BET method) or image analysis of a cross-section of the composite 10 by means of a scanning electron microscope (SEM). In the surface area measurement through a gas adsorption method, washing the composite 10 recovered from the electrochemical element 11 with an organic solvent, and separation of the metal oxide 19 through centrifugation are repeatedly performed. Subsequently, the specific surface area of the metal oxide 19 is measured with reference to JIS Z8830:2013, with multiplication of the mass of the metal oxide 19 by the specific surface area.

Before conducting specific surface area measurement, the composite is subjected to a degassing treatment in an inert gas (e.g., He) atmosphere (e.g., at 200°C for 60 minutes), to thereby remove a substance physically adsorbed on the surface of the metal oxide 19. The gas to be adsorbed for specific surface area measurement is, for example, a gas mixture ($He:N_2=7:3$), and the amount of adsorbed gas is measured through a flow method. A parameter is calculated through a one-point method. The surface area of the metal oxide 19 can be determined through image analysis. Specifically, a circle-equivalent diameter of the metal oxide 19 emerged in an SEM image of a cross-section of the composite 10 is determined through image analysis, and the surface areas of spheres each having the circle-equivalent diameter are summed.

The ratio (by vol. %) of the metal oxide 19 and the ionic liquid 22 present in the composite 10 is determined from an SEM image of a cross-section of the composite 10 or chemical analysis. To determine the volume of the ionic liquid 22 on the basis of the corresponding SEM image, firstly, the composite 10 is frozen by liquid nitrogen or the like. Alternatively, the composite 10 is embedded in a 4-functioanl epoxy-based resin or the like to immobilize the composite 10, and then polishing, irradiation with focused ion beam (FIB), or ion milling is conducted, to thereby yield a cut cross-section.

Next, by means of an SEM equipped with an energy-dispersive X-ray spectrometer (EDS), a vision field selected at random from a cut cross surface (×5,000) is subjected to element analysis to identify distribution of elements forming the metal oxide 19 and the ionic liquid 22, or image analysis of the contrast in a reflected electron image. As a result, the areas of the metal oxide 19 and the ionic liquid 22 occupying the cut cross-section of the composite 10 are measured. The areas of the metal oxide 19 and the ionic liquid 22 in the cut cross-section are reduced, to thereby obtain the relative amounts (vol. %) of the metal oxide 19 and the ionic liquid 22.

The volume of the ionic liquid 22 is determined through chemical analysis. Specifically, the species of the ionic liquid 22 is identified. Then, the ionic liquid 22 concentration is determined. The species of the ionic liquid 22 may be identified through GC-MS, Fourier transform infrared spectroscopy (FT-IR), proton nuclear magnetic resonance spectroscopy ($^1H$-NMR), carbon 13 nuclear magnetic resonance spectroscopy ($^{13}C$-NMR), or the like. The concentration of the ionic liquid 22 is determined through $^1H$-NMR or the like.

The circle-equivalent median diameter of the metal oxide 19 emerged in a cross-section of the composite 10 is preferably 0.5 to 10 μm, more preferably 0.5 to 6 μm. The surface area of the metal oxide 19 is tuned to an appropriate value, to thereby ensure the amount of ions transferring between the electrolytic solution present on the surface of the metal oxide 19 and the metal oxide 19.

In order to determine the median diameter of the metal oxide 19, firstly, an SEM image of the metal oxide 19 emerged in a cross-section of the composite 10 is analyzed, to thereby calculate the circle-equivalent diameter of a particle of the metal oxide 19, and volume-based particle size distribution is calculated. The diameter corresponds to a circle -equivalent diameter to provide a 50% cumulative occurrence value in the particle size distribution. The image for determining the particle size distribution must have an area in the cross-section of 400 $\mu m^2$ or more, for securing accuracy.

In the composite 10, preferably, a large amount of the ionic liquid 22 is adsorbed on the metal oxide 19. As compared with a free ionic liquid which is not adsorbed on the metal oxide 19, the ionic liquid 22 adsorbed on the metal oxide 19 exhibits varied thermal characteristics. Therefore, the heat quantity Q2 (J/g) which is attributed to solidification of a mixture provided by mixing the ionic liquid 22 and the metal oxide 19 having the same molecular structures as those of the

ionic liquid and the metal oxide contained in the composite 10 at the same compositional ratio as that employed in the composite 10 and which is determined through differential scanning calorimetry (DCS) is less than the heat quantity Q1(J/g) which is attributed to solidification of an ionic liquid having the same molecular structure as that of the ionic liquid 22 contained in the composite 10 and which is determined through DCS.

The metal oxide 19 may be mixed with the ionic liquid 22 so as to satisfy the relationship $Q2/Q1<0.5$. Satisfaction of the relationship $Q2/Q1<0.5$ means that a large amount of the ionic liquid 22 contained in the composite 10 is adsorbed on the metal oxide 19; i.e., a predominant amount of the ionic liquid 22 is present between the metal oxide 19 and the ester-type solvent 23.

The molecular structure of the ionic liquid 22 can be determined through GC-MS, FT-IR, $^{1}H$-NMR, $^{13}C$-NMR, or the like. The ionic liquid 22 having the same molecular structure encompasses an ionic liquid having the same molecular skeleton, counter ion, alkyl chain length, and the like but a different conformation. Element analysis of the metal oxide 19 may be carried out through, for example, fluorescent X-ray analysis (XRF). The structure of the metal oxide 19 can be determined through X-ray diffractometry.

The ionic liquid 22 content and the metal oxide 19 content of the composite 10 may be determined by measuring the ionic liquid 22 concentration and measuring the mass of the metal oxide 19. The ionic liquid 22 concentration may be determined through $^{1}H$-NMR or a similar technique. The mass of the metal oxide 19 may be determined by washing the composite 10 recovered from the electrochemical element 11 with an organic solvent; separating the metal oxide 19 through centrifugation, which are conducted repeatedly; and then weighing the separated metal oxide 19.

The heat quantity Q1which is attributed to solidification of an ionic liquid in DSC may be obtained in reference to a specific value disclosed in a document in relation to an ionic liquid having a specific molecular structure. Alternatively, Q1 may be obtained through DSC measurement of a commercial ionic liquid having a specific molecular structure.

The mixture for the measurement of heat quantity Q2 is obtained by the following procedure. Specifically, an ionic liquid and a metal oxide having the same molecular structures as those of the ionic liquid 22 and the metal oxide 19 present in the composite 10 are weighed at the same proportion as that of the composite 10. The thus-weighed metal oxide and ionic liquid are mixed by means of, for example, a mortar and a pestle. Through DSC measurement of the mixture, Q2 attributed to solidification of the ionic liquid contained in the mixture can be determined.

When the document discloses values of Q1 and measurement conditions of Q1, the conditions under which Q2 is measured are the same as those disclosed in the document disclosing Q1. If the document fails to disclose the Q1 measurement conditions, Q1 and Q2 are measured under the same appropriate conditions. In a preferred mode, a sample is cooled at a sweep rate slower than the time of phase transformation of the ionic liquid (i.e., phase transformation or structural relaxation), and heat quantities Q1 and Q2 attributed to solidification occurring in the step is measured. When the sample is in an over-cooled state in the cooling step to fail to cause solidification, the sample in an over-cooled state is heated at the same rate as the sweep rate of cooling, and heat quantities Q1 and Q2 attributed to crystallization (solidification) occurring in the heating step are determined.

When the ionic liquid 22 contained in the composite 10 has a fluorine atom in the molecular structure, a first mixture provided by mixing an ionic liquid (I) having the same molecular structure as that of the ionic liquid 22 with a metal oxide (O) having the same structure as that of the metal oxide 19 at the same proportion employed in the composite 10 may exhibit the relationship of $W1/W2\geq1.1$. In the relationship, W1 is a half width of at least one signal of the signals measured through $^{19}F$ nuclear magnetic resonance spectroscopy ($^{19}F$-NMR) and attributed to a fluorine atom contained in the ionic liquid (I), and W2 is a half width of a signal measured through $^{19}F$-NMR and attributed to a fluorine atom of the ionic liquid (I) contained in the second mixture which is prepared by mixing the ionic liquid (I) with the metal oxide (O) so as to adjust the value of $V/S\times10^{9}$ of 35 nm.

In the ionic liquid 22 contained in the composite 10, anions of the ionic liquid 22 are thought to be adsorbed on the metal oxide 19. The molecule of the ionic liquid 22 on which anions of the metal oxide 19 are adsorbed exhibits a reduced molecular movement property, and a shorter relaxation time from the excited state at stopping of radio wave pulse radiation in $^{19}F$-NMR, as compared with a free ionic liquid which does not adsorb on the metal oxide 19. Since the half width of the signal is in proportion to the reciprocal value of the relaxation time ($T_2$), the half width of the signal of the ionic liquid 22 adsorbed on the metal oxide 19 increases, as compared with a similar half width in the case of a free ionic liquid which does not adsorb on the metal oxide 19.

The case in which the half width W2 of the signal attributed to the ionic liquid (I) in the second mixture prepared by mixing the ionic liquid (I) with the metal oxide (O) so as to adjust the value of $V/S\times10^{9}$ of 35 nm is 1.1.times or more the half width W1 of the signal attributed to the ionic liquid (I) adsorbed on the metal oxide (O) in the first mixture means that a large amount of the ionic liquid 22 contained in the composite 10 is adsorbed on the metal oxide 19. That is, a large amount of the ionic liquid 22 is present between the metal oxide 19 and the ester-type solvent 23.

The composite 10 has a ratio of the volume of the metal oxide 19 to the sum of the volume of the metal oxide 19 and the volume of the electrolytic solution of 52% or more and less than 100%, preferably 61% or more and less than 100%. By virtue of the combination of the metal oxide 19 with the electrolytic solution, the interfacial resistance of the metal oxide 19 can be considerably reduced, whereby a transport number of ions of the composite 10 can be larger than that of the

transport number of the customary employed electrolytic solution. As a result, the electrochemical element 11 employing the composite 10 exhibits more stable operational performance.

The composite 10 may contain a binder for binding the metal oxide 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene.

The ion conductivity of the composite 10 is determined on the basis of the type, salt concentration, or the like of the metal oxide 19, the electrolyte salt, and the electrolytic solution. The ion conductivity of the composite 10 at 25°C is preferably $4.0 \times 10^{-5}$ S/cm or more, for ensuring the output density of the electrochemical element 11 containing the composite 10.

Since the composite 10 contains an anion originating from the electrolytic solution, the ion conductivity of the composite 10 is determined through the following procedure. Specifically, a current collector is closely bound to each surface of a sheet of the composite 10, to thereby form a symmetric cell. Through the AC impedance method, the entire ion conductivity of the cell is calculated. By multiplying the transport number, ion conductivity is calculated. The transport number is determined through the AC impedance method and the stationary state DC method.

The electrochemical element 11 is fabricated through, for example, the following procedure. Specifically, the ionic liquid 22 compounded with the metal oxide 19, and the ester-type solvent 23 in which an electrolyte salt are dissolved are mixed together. To the resultant mixture, a solution formed by dissolving a binder in a solvent is added, to thereby yield a slurry. The slurry is formed into a tape, which is then dried to form a green sheet (electrolyte sheet) for providing the electrolyte layer 15.

Separately, the ionic liquid 22 compounded with the metal oxide 19, and the ester-type solvent 23 in which an electrolyte salt is dissolved are mixed together. To the resultant mixture, the active material 20 and a solution of a binder dissolved in a solvent are added, to thereby form a slurry. The slurry is formed into a tape on the current-collecting layer 13, which is then dried to form a green sheet (positive electrode sheet) for providing the positive electrode layer 12.

Yet separately, the ionic liquid 22 compounded with the metal oxide 19, and the ester-type solvent 23 in which an electrolyte salt is dissolved are mixed together. To the resultant mixture, the active material 21 and a solution of a binder dissolved in a solvent are added, to thereby form a slurry. The slurry is formed into a tape on the current-collecting layer 17, which is then dried to form a green sheet (negative electrode sheet) for providing the negative electrode layer 16.

The electrolyte sheet, the positive electrode sheet, and the negative electrode sheet are cut into a shape of interest. The cut products thereof are stacked from the positive electrode sheet, the electrolyte sheet, and the negative electrode sheet in that order, and the stacked product is pressed to integrate the sheets. To each of the current-collecting layers 13, 17, a terminal (not illustrated) is connected, and the product is built in a case (not illustrated), and the case is closed. Thus, the electrochemical element 11 including the positive electrode layer 12, the electrolyte layer 15, and the negative electrode layer 16 in that order can be fabricated.

With reference to FIG. 4, a second embodiment will be described. The first embodiment corresponds to a case of a second battery having solid powder generating elements including the composite 10. The second embodiment corresponds to a case of a liquid-type lithium ion battery employing an electrolyte containing an organic solvent and the composite 10. In the second embodiment, the same members as described in the first embodiment are denoted by the same reference numerals, and further descriptions thereof will be omitted. FIG. 4 is a cross-section of an electrochemical element 24 (power storage device) of the second embodiment.

The electrochemical element 24 includes the positive electrode layer 12, a separator 25, and the negative electrode layer 16 in that order. These elements are built in a case (not illustrated). The separator 25 is resistive to the active materials 20 and 21 contained in the positive electrode layer 12 and the negative electrode layer 16, and to an electrolytic solution and is formed of a porous body which allows passage of lithium ions but has no electron conductivity. Examples of the separator 25 include non-woven fabric or porous film formed of cellulose, polypropylene, polyethylene, etc. Since the electrolytic solution employed in the second embodiment is the same as described in the first embodiment, overlapping description will be omitted.

The electrochemical element 24 of the second embodiment has the positive electrode layer 12 and the negative electrode layer 16 each containing the composite 10. Thus, similar to the electrochemical element 11 of the first

embodiment, electrical conductivity of the positive electrode layer 12 and the negative electrode layer 16 can be secured.

With reference to FIG. 5, a third embodiment will be described. The first and second embodiments correspond to a case in which the positive electrode layer 12, the electrolyte layer 15, and the negative electrode layer 16 include the composite 10. The third embodiment corresponds to a case in which protective layers 29, 32 contain the composite 10. In the third embodiment, the same members as described in the first and second embodiments are denoted by the same reference numerals, and further descriptions thereof will be omitted. FIG. 5 is a cross-section of an electrochemical element 26 (power storage device) of the third embodiment.

The electrochemical element 26 includes a positive electrode layer 27, the separator 25, and the negative electrode layer 30 in that order. These elements are built in a case (not illustrated). The electrochemical element 26 is a liquid-type lithium ion battery employing an electrolyte containing an organic solvent.

The positive electrode layer 27 is formed of the current-collecting layer 13 stacked on an active material layer 28. The active material layer 28 contains an active material 20. In order to lower the resistance of the active material layer 28, the active material layer 28 may contain a conducting aid such as carbon black, acetylene black, Ketjen black, carbon fiber, Ni, Pt, and Ag.

Between the separator 25 and the negative electrode layer 30, the protective layer 29 is disposed. The protective layer 29 contains the composite 10.

The negative electrode layer 30 is formed of an active material layer 31, the protective layer 32, and the current-collecting layer 17 stacked in that order. The active material layer 31 is formed of a material, for example, Li, Li-Al alloy, Li-Sn alloy, Li-Si alloy, Li-Mg alloy, Li-Si alloy, or Si-Li alloy. The protective layer 32 contains the composite 10. The protective layers 29, 32 are disposed through sheet stacking, application to the separator 25 or the current-collecting layer 17, or a similar technique.

The metal oxide 19, which has a garnet-type crystal structure including Li, La, Zr, and O, has resistance to reduction by metallic lithium present in the active material layer 31. As a result, stability in operation of the electrochemical element 26 further increases. In addition, the protective layer 29 intervening between the active material layer 31 and the separator 25 suppresses short circuit which would otherwise be caused by dendritic growth of metallic lithium. The protective layer 32 intervening between the active material layer 31 and the current-collecting layer 17 suppresses degradation of the current-collecting layer 17.

## EXAMPLES

The present invention will next be described in detail by way of examples, which should not be construed as limiting the invention thereto.

### (Preparation of metal oxide)

$Li_2CO_3$, MgO, $La(OH)_3$, $SrCO_3$, and $ZrO_2$ were weighed so as to establish a formula: $Li_{6.95}Mg_{0.15}La_{2.75}Sr_{0.25}Zr_{2.0}O_{12}$. The amount of $Li_2CO_3$ was adjusted to an about 15 mol%-excess (as reduced to elemental Li), in consideration of sublimation of Li during firing. The thus-weighed raw materials, ethanol, and zirconia balls were fed to a nyoln-made pot, and the mixture was pulverized and mixed by means of a ball mill for 15 hours. The resultant slurry was removed from the pot and dried. The dry product was calcined on an MgO plate (at 900°C for 1 hour). The calcined powder was put into a nylon-made pot with ethanol, and the mixture was pulverized and mixed by means of a ball mill for 15 hours.

The slurry removed from the pot was dried, and the dry product was added to a metal mold (diameter: 12 mm), followed by press forming the dry product, to thereby yield a compact having a thickness of about 1.5 mm. By means of a cold isostatic press (CIP) machine, the compact was pressed at a hydrostatic pressure of 1.5 $t/cm^2$. The compact was covered with a calcined powder having the same chemical composition as that of the compact, and the resultant body was fired in a reducing atmosphere (at 1,100°C for 4 hours), to thereby yield a sintered body of a metal oxide. The lithium ion conductivity of the sintered body, as determined through the AC impedance method, was $1.0\times10^{-3}$ S/cm. The lithium ion conductivity was measured at 25°C, a voltage of 10 mV, and a frequency of 7 MHz to 100 mHz.

The sintered body was pulverized by means of a mortar in an Ar atmosphere, to thereby yield a powder-form metal oxide (hereinafter referred to as "LLZ"). The median diameter in the particle size distribution of LLZ, determined through a laser diffraction-scatting technique, was about 3 $\mu$m.

### (Preparation of electrolytic solution)

An electrolyte salt, $LiN(SO_2F)_2$(LiFSI), was dissolved in ethyl methyl carbonate, to thereby prepare an electrolytic solution having a salt concentration of 2 $mol/dm^3$.

(Example 1)

LLZ and N-methyl-N-propylpyrrolidinium bis(fluorosulfonyl)imide (P13-FSI) serving as an ionic liquid, were put into a mortar at a ratio of 86:4 (by mass), and the components were compounded by means of a pestle, to thereby yield a compounded powder. The thus-obtained compounded powder and an electrolytic solution were put into a mortar at a ratio of 90:10 (by mass), and the components were compounded by means of a pestle, to thereby yield a composite of Example 1.

(Example 2)

P13-FSI and an electrolytic solution were mixed at a ratio of 4:10 (by mass), to thereby prepare a liquid mixture. LLZ and the liquid mixture were put into a mortar at a ratio of 86:14 (by mass), and the components were compounded by means of a pestle, to thereby yield a composite of Example 2.

(Example 3)

LLZ and P13-FSI were put into a mortar at a ratio of 80:17 (by mass), and the components were compounded by means of a pestle, to thereby yield a compounded powder. The compounded powder and an electrolytic solution were put into a mortar at a ratio of 97:3 (by mass), and the components were compounded by means of a pestle, to thereby yield a composite of Example 3.

(Example 4)

LiFSI was dissolved in P13-FSI, to thereby prepare a liquid mixture having a salt concentration of 3 mol/$dm^3$. LLZ and the liquid mixture were put into a mortar at a ratio of 80:17 (by mass), and the components were compounded by means of a pestle, to thereby yield a compounded powder. The compounded powder and an electrolytic solution were put into a mortar at a ratio of 97:3 (by mass), and the components were compounded by means of a pestle, to thereby yield a composite of Example 4.

(Example 5)

LLZ and $LiNi_{0.8}Co_{0.15}Al_{0.05}O_2$ (hereinafter referred at as "NCA") were put into a mortar at a ratio of 2.86:85.87 (by mass), and the components were compounded by means of a pestle, to thereby yield a powder mixture. The powder mixture and P13-FSI were put into a mortar at a ratio of 88.73:1.27 (by mass), and the components were compounded by means of a pestle, to thereby yield a compounded powder. The compounded powder and an electrolytic solution were put into a mortar at a ratio of 90:10 (by mass), and the components were compounded by means of a pestle, to thereby yield a composite of Example 5.

(Example 6)

LLZ and $Li(Ni_{1/3}Mn_{1/3}Co_{1/3})O_2$ (hereinafter referred at as "NMC") were put into a mortar at a ratio of 2.95:86.54 (by mass), and the components were compounded by means of a pestle, to thereby yield a powder mixture. The powder mixture and P13-FSI were put into a mortar at a ratio of 89.49:0.51 (by mass), and the components were compounded by means of a pestle, to thereby yield a compounded powder. The compounded powder and an electrolytic solution were put into a mortar at a ratio of 90:10 (by mass), and the components were compounded by means of a pestle, to thereby yield a composite of Example 6.

(Comparative Example)

LLZ and an electrolytic solution were put into a mortar at a ratio of 85:15 (by mass), and the components were compounded by means of a pestle, to thereby yield a composite of Comparative Example.

(Calculation of V/S)

The value of $V/S \times 10^9$ (nm), in which the surface area of LLZ contained in any of the composites of the Examples 1 to 6 and Comparative Example is represented by S ($m^2$) and the volume of the ionic liquid contained in the composite is represented by V ($m^3$), was calculated. Notably, the specific surface area of LLZ was determined by means of a full-automated specific surface area measuring apparatus (HM-1208) through a one-point flow BET technique ($He:N_2$=7:3),

and then the surface area of LLZ was determined by multiplying the mass of LLZ contained in the composite by a relevant specific surface area. Each of the samples to be subjected to specific surface area measurement was received degassing treatment in an inert gas atmosphere at 200°C for 60 minutes, before the measurement.

(Calculation of Q2/Q1)

Each of the composites obtained in the Examples 1 to 6 was charged into aluminum pan, and cooled under Ar from 25°C at a cooling rate of 5°C/minute., and the composite was subjected to differential scanning calorimetry, to thereby determine heat quantity Q2 (J/g) attributed to solidification of P13-FSI contained in the composite. In a similar manner, P13-FSI was charged into aluminum pan, and cooled under Ar from 25°C at a cooling rate of 5°C/minute., and the P13-FSI was subjected to differential scanning calorimetry, to thereby determine heat quantity Q1 (J/g) attributed to solidification of P13-FSI contained in the composite. Thus, the ratio Q2/Q1 was calculated. Since the composite of Comparative Example contained no P13-FSI, differential scanning calorimetry was not conducted.

(Resistance measurement)

Under Ar, each of the composites of Examples 1 to 6 and Comparative Example was put into a cylindrical insulating member (inner diameter: 10 mm), and monoaxially pressed at 500 MPa, to thereby form a compact. The electrical resistance (at 10 kHz) of each compact was measured at 25°C through the AC impedance method.

(Determination of $^{19}$F-NMR signal half width)

In a similar manner that employed in Example 1, LLZ and P13-FSI were put into a mortar at a ratio of 86:4 (by mass), and the components were placed in a mortar and compounded by means of a pestle, to thereby yield a first mixture. Separately, LLZ and P13-FSI were weighed so that the value of $V/S \times 10^9$ to 35 nm, and the components were compounded by means of a pestle, to thereby yield a second mixture.

Each of the first and second mixtures was placed in sample tube made of zirconia, and $^{19}$F-NMR was measured by means of a solid NMR spectrometer. The measurement condition included a Larmor frequency of 564.73 MHz, a magic angle rotation of 20 kHz, and a magnetic field intensity of 14.1 T. In each case, a signal attributed to a fluorosulfonylimide anion was observed at about 53 ppm. The ratio (W1/W2) of the half width W1 of the signal of the first mixture divided by the half width W2 of the signal of the second mixture was 1.1.

(Results)

Table 1 shows the values of V/S(nm), Q2/Q1, and resistance (Ω).

[Table 1]

| | V/S (nm) | Q2/Q1 | Resistance (Ω) |
|---|---|---|---|
| Example 1 | 8 | 0.46 | 759 |
| Example 2 | 8 | 0.46 | 624 |
| Example 3 | 43 | 0.87 | 33 |
| Example 4 | 43 | 0.00 | 110 |
| Example 5 | 6 | 0.06 | - |
| Example 6 | 8 | 0.20 | - |
| Comp. Ex. | 0 | - | 3202 |

The electrical resistance of the composites of Examples 1 to 4 was about 1/4 or less that of the composite of Comparative Example. Conceivably, in the composites of Examples 1 to 4, P13-FSI attached to the surface of LLZ, and P13-FSI intervened between LLZ and ethyl methyl carbonate. As a result, as compared with the composite of Comparative Example, decomposition of ethyl methyl carbonate was reduced, to thereby reduce electrical resistance. The electrical resistance of the composites of Examples 5 and 6 failed to be measured due to intrinsic electron conductivity of NCA and NMC. However, similar to the composites of Examples 1 to 4, decomposition of ethyl methyl carbonate was conceivably reduced by attaching of P13-FSI to the surface of LLZ.

In the composites of Examples 3 and 4, leakage of liquid occurred during formation of compacts. Thus, preferably,

the value of V/S is 40 nm or less, and the value of Q2/Q1 is 0.5 or less. In the case of the composite of Example 4, no heat generation attributed to solidification of a liquid mixture of LiFSI dissolved in P13-FSI was observed. Thus, the value of Q2/Q1 was 0.

The value of $V/S\times10^9$ of the first mixture was 8 nm. When the value of $V/S\times10^9$ is smaller, the ratio of the amount of an ion liquid adsorbed on LLZ to the entire amount of the ionic liquid present in the mixture is higher. Therefore, the second mixture has a ratio of the amount of an ion liquid adsorbed on LLZ higher than that of the composites of Examples 3 and 4. Also, the first mixture has a ratio of the amount of an ion liquid adsorbed on LLZ higher than that of the second mixture.

In the case of a composition showing a wide half width of a $^{19}$F-NMR signal, conceivably, molecular motion of P13-FSI on the surface of LLZ is deactivated, to thereby provide a high ratio of anions adsorbed on LLZ. In consideration of balance of electric charge, an ionic liquid *per se* including an anion and a cation is thought to be adsorbed on LLZ. Therefore, the first mixture has a ratio of the amount of an ion liquid adsorbed on LLZ higher than that of the second mixture, and conceivably, decomposition caused by reaction between LLZ and an ester solvent can be efficiently suppressed by a small amount of ionic liquid. Notably, in consideration that the second mixture has a value of $V/S\times10^9$ smaller than that of the composites of Examples 3 and 4, conceivably, the second mixture exhibits an effect of suppressing decomposition of an ester solvent which effect is equivalent to or higher than that of Examples 3 and 4.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above embodiments, the electrochemical element 11 has the positive electrode layer 12 in which the composite layer 14 is provided on one surface of the current-collecting layer 13, and the negative electrode layer 16 in which the composite layer 18 is provided on one surface of the current-collecting layer 17. However, the present invention is not necessarily limited thereto. It should be apparent for those skilled in the art that the elements of the above embodiments can be applied to, for example, a power storage device which includes an electrode layer having the current-collecting layer 13 provided with the composite layer 14 and the composite layer 18 on each surface (i.e., a so-called bipolar electrode). By alternatingly stacking the bipolar electrode and the electrolyte layer 15, and inserting the stacked product into a case (not illustrated), a so-called power storage device of a bipolar structure can be obtained.

The first embodiment corresponds to the case in which each of the composite layers 14, 18 and the electrolyte layer 15 contains the composite 10. However, the present invention is not necessarily limited thereto. In the electrochemical element 11, at least one member of the composite layers 14, 18 and the electrolyte layer 15 essentially contains the composite 10.

The second embodiment corresponds to the case in which each of the composite layers 14, 18 contains the composite 10. However, the present invention is not necessarily limited thereto. In the electrochemical element 24, at least one member of the composite layers 14, 18 essentially contains the composite 10.

The third embodiment corresponds to the case in which the protective layer 29 is disposed between the active material layer 31 and the separator 25, and the protective layer 32 is disposed between the current-collecting layer 17 and the active material layer 31. However, the present invention is not necessarily limited thereto. Needless to say, either of the protective layers 29 and 32 may be omitted.

In the above-described embodiments, the composite 10 has been described in detail, taking the electrochemical elements 11, 24, and 26 formed of a lithium ion battery as examples. However, the present invention is not necessarily limited thereto. Examples of other electrochemical elements containing the composite 10 include a lithium ion capacitor, a lithium-sulfur battery, a lithium-oxygen battery, a lithium-air battery, and a sodium ion battery.

REFERENCE SIGNS LIST

10: composite
11, 24, 26: electrochemical element (power storage device)
12: positive electrode layer (sheet)
15: electrolyte layer (sheet, separator)
16: negative electrode layer (sheet)
17: current-collecting layer
19: metal oxide
22 ionic liquid
23: ester-type solvent
25: separator
27: positive electrode layer

29, 32: protective layer
30: negative electrode layer

## Claims

**1.** A composite comprising a metal oxide and an ester-type solvent in which an electrolyte salt is dissolved, wherein an ionic liquid attaches to the surface of the metal oxide.

**2.** A composite according to claim 1,

which exhibits a ratio in heat quantity of Q2/Q1 of less than 0.5, wherein Q1 represents a heat quantity (J/g) which is attributed to solidification of an ionic liquid having the same molecular structure as that of the ionic liquid contained in the composite and which is determined through differential scanning calorimetry, and
Q2 represents a heat quantity (J/g) which is attributed to solidification of an ion liquid contained in a mixture which is provided by mixing the ionic liquid and a metal oxide having the same molecular structures as those of the ionic liquid and the metal oxide contained in the composite at the same compositional ratio as that employed in the composite and which is determined through differential scanning calorimetry.

**3.** A composite according to claim 1 or 2,
which exhibits a value of $V/S \times 10^9$ of 1 nm or more and 40 nm or less, wherein S represents a surface area ($m^2$) of the metal oxide, and V represents a volume ($m^3$) of the ionic liquid.

**4.** A composite according to claim 3,

wherein the ionic liquid contains a fluorine atom in the molecular structure, and
the composite exhibits a ratio W1/W2 of 1.1 or more, wherein W1 represents a half width of at least one of the signals measured through $^{19}F$ nuclear magnetic resonance spectroscopy and attributed to a fluorine atom contained in a first mixture which is provided by mixing an ionic liquid having the same molecular structure as that of the ionic liquid contained in the composite and a metal oxide at the same compositional ratio as that employed in the composite, and W2 represents a half width of a signal measured through $^{19}F$ nuclear magnetic resonance spectroscopy and attributed to a fluorine atom contained in a second mixture which is prepared by use of an ionic liquid having the same molecular structure as that of the ionic liquid contained in the composite and a metal oxide so as to adjust the value of $V/S \times 10^9$ to 35 nm.

**5.** A sheet comprising a composite as recited in claim 1 or 2.

**6.** An electrochemical element comprising a composite as recited in claim 1 or 2.

**7.** A power storage device comprising a positive electrode layer, a negative electrode layer, and a separator which isolates the positive electrode layer from the negative electrode layer, and
a composite as recited in any of claim 1 or 2.

**8.** A power storage device according to claim 7, wherein
at least one of the positive electrode layer, the negative electrode layer, and the separator contains a composite.

**9.** A power storage device according to claim 7, wherein

at least one of the positive electrode layer and the negative electrode layer includes a current-collecting layer;
the device has a protective layer abutting at least one of the separator and the current-collecting layer; and
the protective layer contains a composite.

FIG. 1

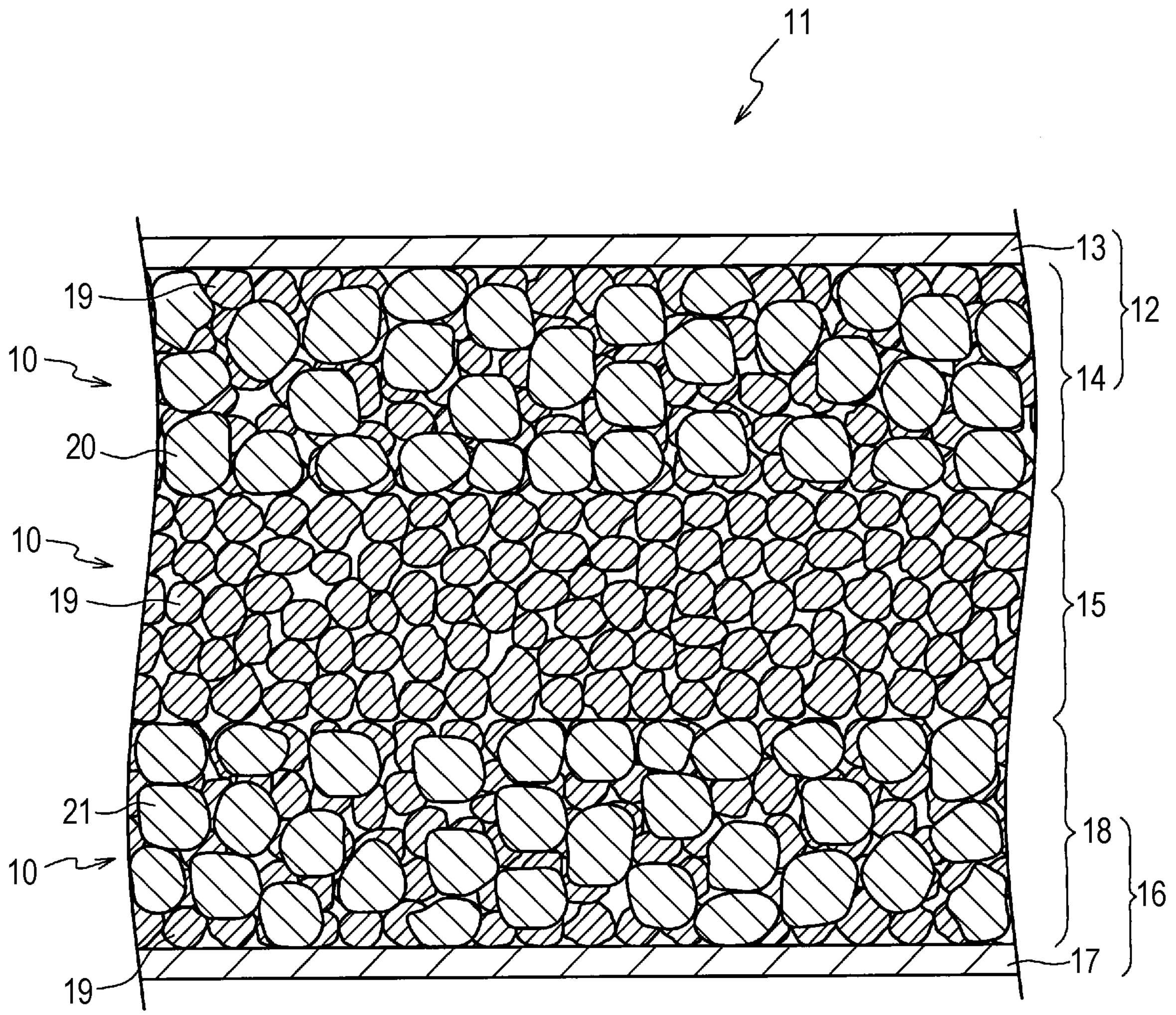

# FIG. 2

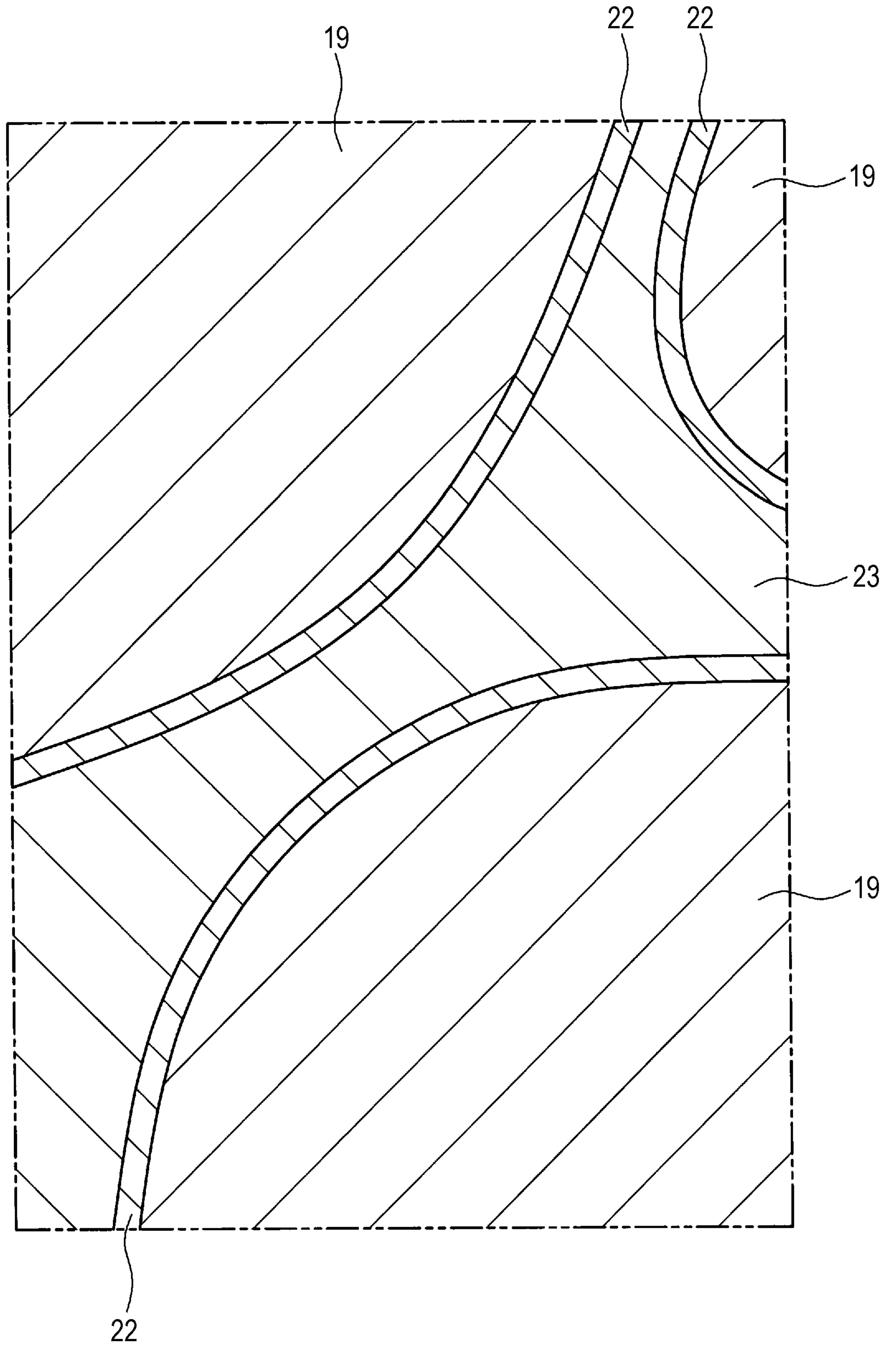

FIG. 3

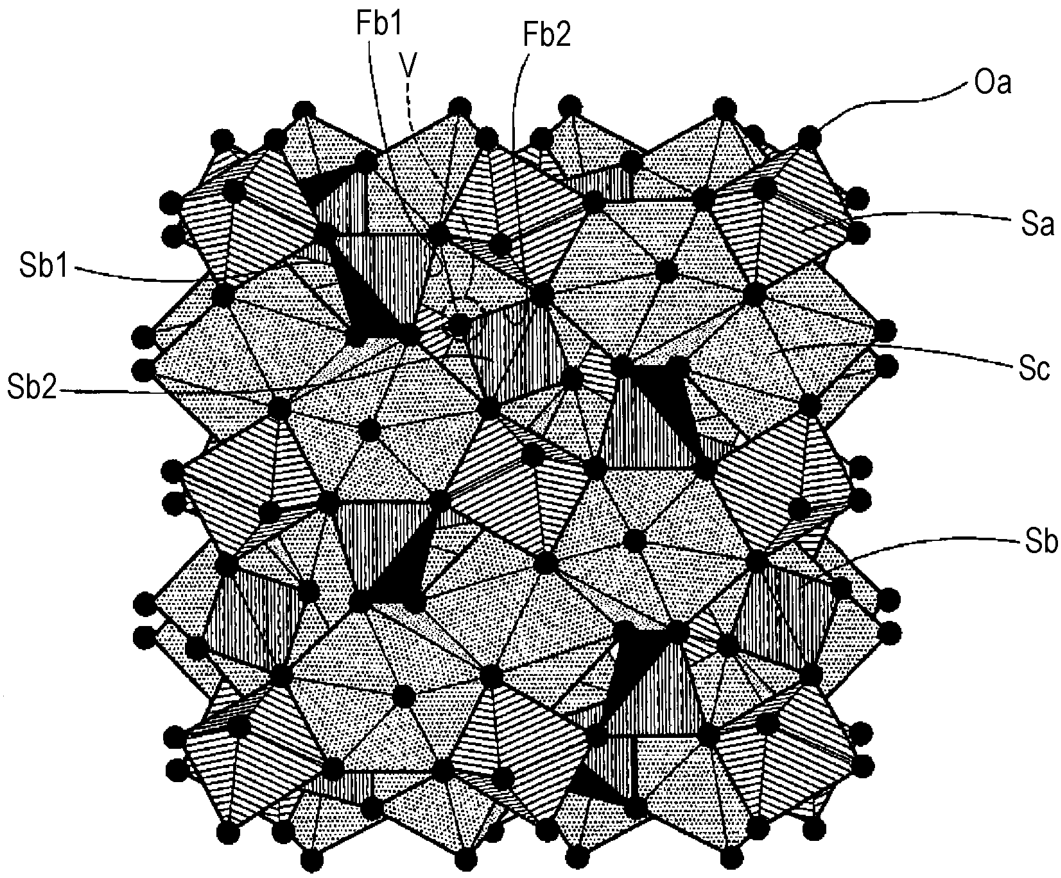

FIG. 4

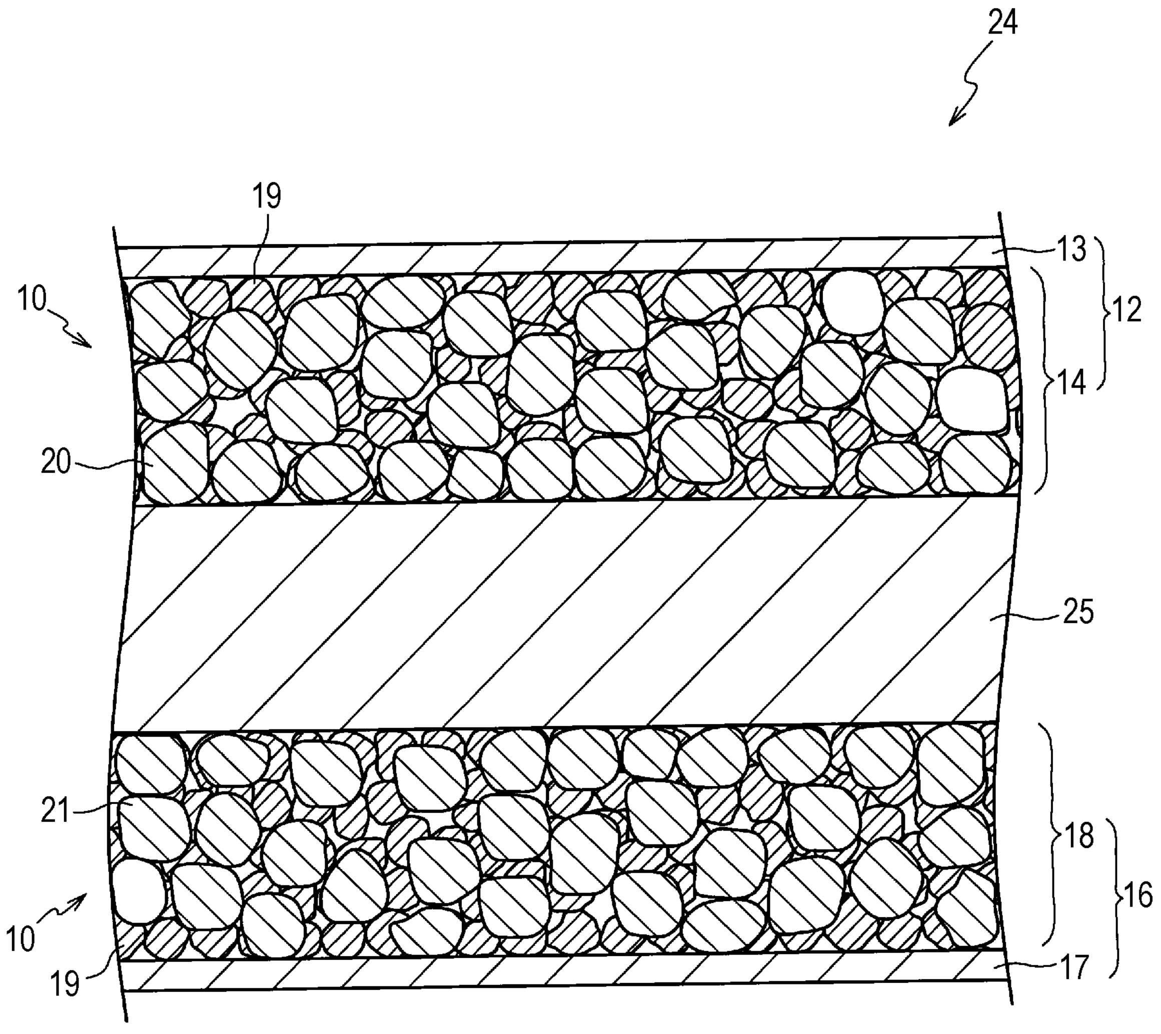

FIG. 5

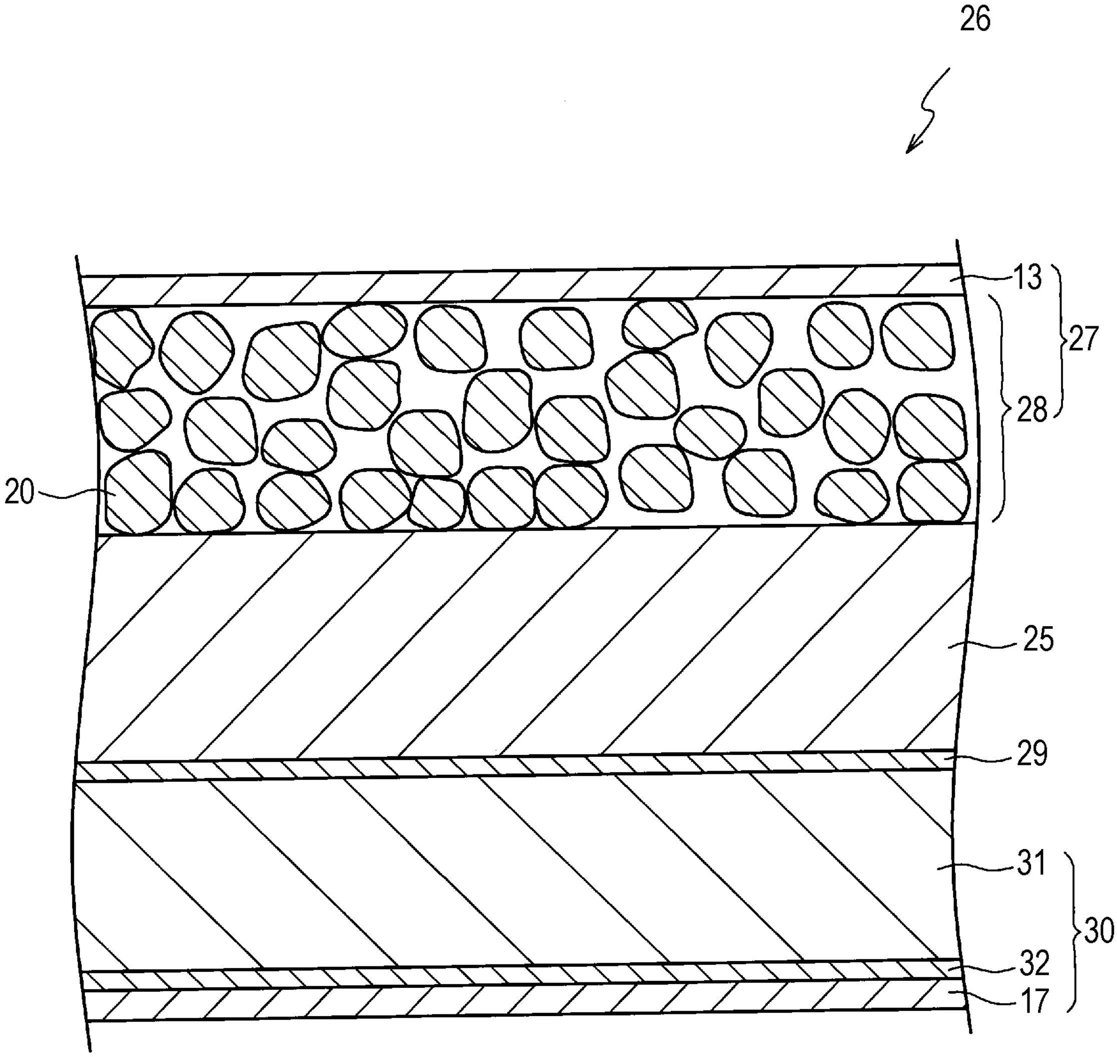

**INTERNATIONAL SEARCH REPORT**

International application No.
**PCT/JP2023/017254**

**A. CLASSIFICATION OF SUBJECT MATTER**

***H01B 1/06***(2006.01)i; ***H01M 10/0568***(2010.01)i
FI: H01B1/06 A; H01M10/0568

According to International Patent Classification (IPC) or to both national classification and IPC

**B. FIELDS SEARCHED**

Minimum documentation searched (classification system followed by classification symbols)

H01B1/06; H01M10/0568

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2012-160345 A (TOSHIBA CORP) 23 August 2012 (2012-08-23)<br>claim 1, paragraphs [0010], [0050], [0068], [0070] | 1, 5-9<br>2-4 |
| Y<br>A | WO 2009/142251 A1 (NEC CORPORATION) 26 November 2009 (2009-11-26)<br>paragraph [0003] | 1, 5-9<br>2-4 |
| A | JP 2011-113906 A (KONICA MINOLTA HOLDINGS INC) 09 June 2011 (2011-06-09) | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/017254**

| Patent document cited in search report | Publication date (day/month/year) | Patent family member(s) | Publication date (day/month/year) |
|---|---|---|---|
| JP 2012-160345 A | 23 August 2012 | US 2012/0202110 A1<br>claim 1, paragraphs [0029]-[0030], [0080], [0098], [0100] | |
| WO 2009/142251 A1 | 26 November 2009 | US 2011/0070504 A1<br>paragraph [0012]<br>EP 2280444 A1<br>CN 102037600 A<br>KR 10-2011-0005880 A | |
| JP 2011-113906 A | 09 June 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018045965 A